(19) **Europäisches Patentamt**

**European Patent Office**

**Office européen des brevets**

(11) **EP 0 939 556 B1**

(12) **EUROPEAN PATENT SPECIFICATION**

(45) Date of publication and mention
of the grant of the patent:
**05.12.2001 Bulletin 2001/49**

(51) Int Cl.⁷: **H04N 9/64**, H04N 11/18

(21) Application number: **99102942.2**

(22) Date of filing: **13.02.1999**

(54) **Method and apparatus for digital multi-standard colour signal demodulation**

Verfahren und Vorrichtung zur digitalen Multinorm-Farbsignaldemodulation

Appareil et méthode pour la démodulation numérique d'un signal couleur multistandard

(84) Designated Contracting States:
**DE FR GB IT**

(30) Priority: **25.02.1998 EP 98250069**

(43) Date of publication of application:
**01.09.1999 Bulletin 1999/35**

(73) Proprietor: **DEUTSCHE THOMSON-BRANDT
GMBH**
**78048 Villingen-Schwenningen (DE)**

(72) Inventors:
• **Lin, Jinan**
**85521 Ottobrun (DE)**

• **Erbar, Maximilian**
**78052 Villingen-Schwenningen (DE)**

(74) Representative: **Hartnack, Wolfgang, Dipl.-Ing.**
**Deutsche Thomson-Brandt GmbH**
**European Patent Operations**
**Karl-Wiechert-Allee 74**
**30625 Hannover (DE)**

(56) References cited:
**EP-A- 0 486 095**        **EP-A- 0 597 160**
**WO-A-91/12696**

**Description**

Background

The key component of a digital PAL or NTSC colour decoder is a quadrature demodulator for these AM modulated signals. For a SECAM colour decoder, however, an FM demodulator is required which is conventionally implemented using a Hilbert filter which is followed by a CORDIC processor (coordinate rotation digital computer) and a differentiation stage. EP-A-0 597 160 discloses a corresponding digital stand-alone SECAM decoder.
A CORDIC processor is described in more detail in EP-A-0 329 812 and EP-A-0 597 160 and in an article cited therein.
EP-A-0 486 095 shows a quadrature mixer for a standard FM signal having I and Q components and a single centre frequency. The mixer's output signals are processed in a CORDIC circuit.

Invention

It would be advantageous if for multi-standard TV or VCR applications a multi-standard digital colour demodulator for PAL, NTSC and SECAM TV systems could be implemented on one chip having as much as possible common demodulation processing stages.
However, since PAL and NTSC use AM modulation whereas SECAM uses FM modulation with two different carriers for the colour information in the composite video signal, a conventional solution for a digital SECAM colour demodulator using a Hilbert filter as shown in EP-A-0 597 160 has little commonness to that for a digital PAL and/or NTSC colour demodulator using a quadrature mixer. Thus, it seems to be inconvenient to combine both solutions on a multi-standard colour demodulator chip for all of the three systems.
However, the inventors have found a solution for this problem which allows to have a single common quadrature demodulator or mixer for all three colour systems.
Accordingly, it is one object of the invention to disclose a method for digitally demodulating PAL, NTSC and SECAM colour signals using at least one common processing stage. This object is achieved by the method disclosed in claim 1.
It is a further object of the invention to disclose an apparatus which utilises the inventive method. This object is achieved by the apparatuses disclosed in claims 8 and 9.
According to the invention, the Hilbert filter disclosed in EP-A-0 597 160 is replaced by a quadrature mixer operating with a single mixer frequency in the first step of the SECAM colour demodulation. For this quadrature mixer the already existing quadrature mixer for the PAL/NTSC demodulation can be used. Thereby for a major part of the colour demodulation process a common structure is obtained.
In principle, the inventive method is suited for digital SECAM colour signal demodulation, wherein the initial demodulation step is carried out using a quadrature mixer.
Advantageous additional embodiments of the inventive method are disclosed in the respective dependent claims.
In principle the inventive apparatus is suited for digital PAL or NTSC or SECAM colour signal demodulation and includes:

-    a quadrature mixer which outputs the PAL or NTSC colour components or in case of SECAM an x and an y signal, wherein in case of SECAM a single mixing frequency is used resulting in a bias effect caused by the non-standard-matching colour carrier mixing frequency or frequencies;
-    a stage, in particular a CORDIC processor, which in case of SECAM calculates the function arctan(y/x);
-    a subsequent stage in which a differentiation and a clamping is performed on the arctan(y/x) signal, wherein said bias effect is corrected by a corresponding clamping operation and wherein the SECAM colour components are obtained through an identification of the U and V lines,

or includes:

-    a quadrature mixer which outputs the PAL or NTSC colour components or in case of SECAM an x and an y signal, wherein in case of SECAM the mixing frequency is switched line-alternately to one of the standard SECAM colour carrier frequencies;
-    a stage, in particular a CORDIC processor, which in case of SECAM calculates the function arctan(y/x);
-    a subsequent stage in which a differentiation is performed on the arctan(y/x) signal, wherein the SECAM colour components are obtained through an identification of the U and V lines.

Drawings

Embodiments of the invention are described with reference to the accompanying drawings, which show in:

Fig. 1 structure of the inventive digital multi-standard colour demodulator;
Fig. 2 circuitry for SECAM line identification;
Fig. 3 detail of a further embodiment of the invention;
Fig. 4 an implementation of clamping.

Embodiments

The digital input signal to the multi-standard colour demodulator is the modulated colour component signal c(t) after separation from the composite video signal (CVBS). Signal c(t) is fed to two parallel paths in a quadrature mixer QUMX. In the first path c(t) is multiplied in a first digital multiplier M1 by a first digital multiplicator signal C1. The output of M1 is digitally low pass filtered by a first filter LP1, leading to the first output signal x(t). In the second path c(t) is multiplied in a second digital multiplier M2 by a second digital multiplicator signal C2. The output of M2 is digitally low pass filtered by a second filter LP2, leading to the second output signal y(t).
C1 can be expressed by e.g. $\cos(2\pi f_m t)$ and C2 is then $\pm\sin(2\pi f_m t)$, where $f_m$ is the mixer frequency.
If c(t) is a PAL or NTSC colour component signal, x(t) represents the U or I component, respectively, and y(t) represents the V or Q component.
If c(t) is a SECAM colour component signal the x and y signals are fed to respective inputs of a CORDIC processor, at the output of which a signal $\Phi = \arctan(y/x)$ is available which represents the input phase. As a by-product of the CORDIC processor the input amplitude $\sqrt{(x^2+y^2)}$ is calculated, which advantageously can be used as a control signal ACC for automatic colour control.
Although SECAM uses two different colour carriers the inventive circuitry uses a single mixer frequency only. Phase signal $\Phi$ passes a further stage DCL in which a differentiation and a clamping is performed on signal $\Phi$. The differentiation alone leads to the differentiated phase signal $\Delta\Phi$. The SECAM colour components U and V at the output of DCL are then obtained through an identification of the U and V lines.
The following applies for SECAM signals. The input signal is:

$$c(t) \;=\; B'(t)\cos\left(2\pi\left[f_C(t)+k\int_0^t D^*(\tau)\,d\tau\right]\right)$$

where B'(t) is the amplitude, $f_c(t)$ is the modulation frequency, k is the modulation constant, and D*(t) is the colour component to be demodulated.
The output of QUMX is:

$$x(t) \;=\; 1/2*B'(t-\tau_{LP})\cos\left(2\pi\left[(f_C-f_m)(t-\tau_{LP})+k\int_0^{t-\tau_{LP}} D^*(\tau)\,d\tau\right]\right)$$

$$y(t) \;=\; -1/2*B'(t-\tau_{LP})\sin\left(2\pi\left[(f_C-f_m)(t-\tau_{LP})+k\int_0^{t-\tau_{LP}} D^*(\tau)\,d\tau\right]\right)$$

where $\tau_{LP}$ is the delay caused by the low-pass and $f_m$ is the mixer frequency in M1 and M2.

3

The demodulation output signal, i.e. the differentiated output signal $\Phi(t)$ of the CORDIC processor, is:

$$\Delta\Phi(t) \;=\; -\Phi(t-\Delta^\star\tau) \;+\; \Phi(t)$$

$$= \; -\arctan\left[\frac{y(t-\Delta^\star\tau)}{x(t-\Delta^\star\tau)}\right] + \arctan\left[\frac{y(t)}{x(t)}\right]$$

$$= \; 2\pi^\star\Delta^\star\tau^\star kD^\star(t-\tau_{LP}) \;+\; 2\pi^\star\Delta(f_C-f_m)\tau \qquad (\pm 2\pi)$$

with $|\, 2\pi^\star\Delta^\star\tau^\star kD^\star(t-\tau_{LP}) + 2\pi^\star\Delta(f_c-f_m)\tau\,| < \pi$,

where $\tau$ is the sampling rate (i.e. $t = n^\star\tau$ for $n = 0, 1, 2, 3, ...$) and $\Delta$ is an integer representing the differentiation interval.

The mixer frequency fm is switched for different systems. For PAL or NTSC $f_m$ is preferably equal to the colour subcarrier frequency $f_c$ (4.43MHz for PAL). For SECAM, it may be chosen as a value between that of the two colour subcarriers 4.250MHz and 4.406MHz. The bias in the QUMX output caused by the frequency differences is compensated in DCL by clamping.

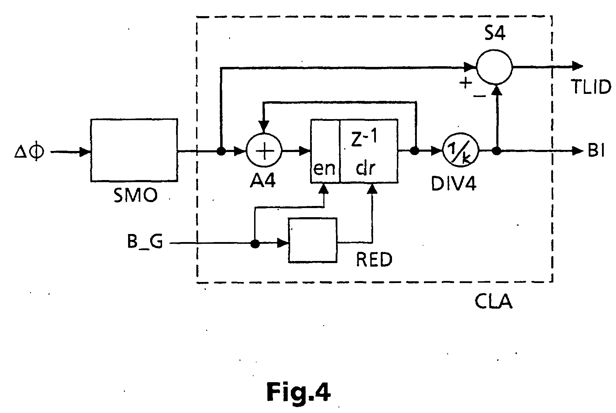

An example implementation of the clamping is illustrated in Fig. 4. This circuitry is included in DCL. The differentiated phase signal $\Delta\Phi$ may pass through a preprocessing stage SMO including a smoothing function to an adder A4 and to an subtractor 54. The output signal of A4 passes through a one-sample delay $Z^{-1}$ and an 1/K divider DIV4 to the subtracting input of S4. The divider output signal forms the bias BI. BI can generally be obtained by averaging the demodulation output signal $\Delta\Phi(t)$ during the colour carrier burst. This is controlled by a corresponding burst gate signal B_G. The clamping is done by subtracting the bias from the demodulation output signal. The delay output is fed back to the second input of adder A4. Delay $Z^{-1}$ is enabled (en) by B_G and is cleared (clr) by the output signal of a rising edge detector RED receiving B_G as input signal. The samples are added in such a way that each of the samples to be averaged is contained once in the sum. The value of K corresponds to the number of sample values to be averaged.

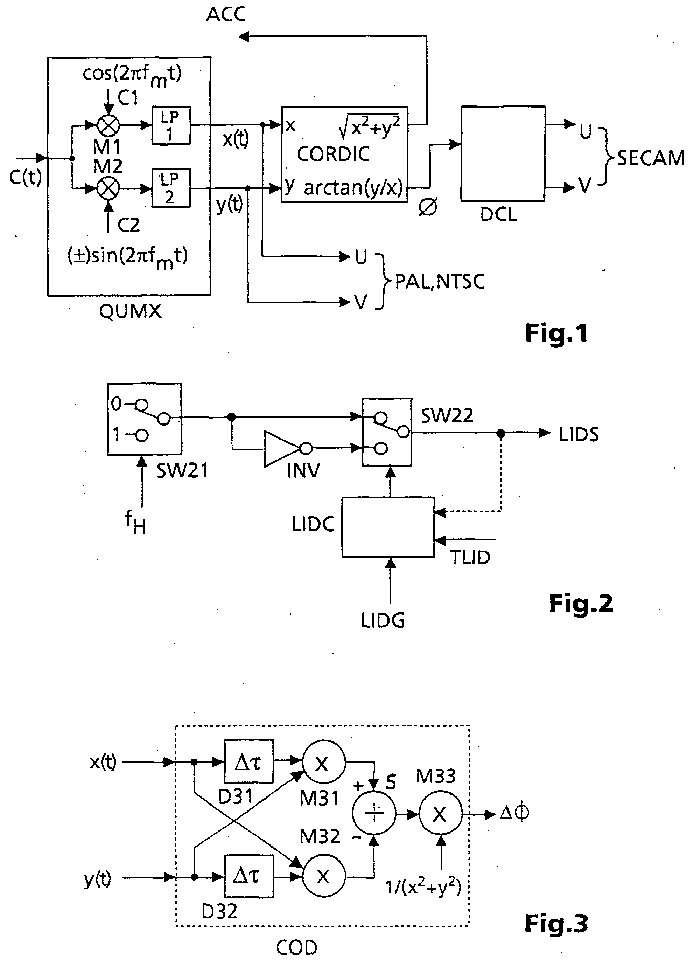

Advantageously, bias BI is also used for the line identification required in SECAM. For identifying the U and V lines the output signal TLID of S4 is fed to a line identification stage. Possible circuitry is shown in Fig. 2. A first switch SW21 which is controlled by the line frequency $f_H$ supplies either logical "0" or "1" to the first input of a second switch SW22 and to the input of an inverter INV. The output of INV is connected to the second input of switch SW22. SW22 is controlled by a line identification checking unit LIDC.

The output of SW22 is the line ID signal LIDS. LIDC judges the correctness of LIDS by checking the bias value. If a fixed mixer frequency $f_m$ between 4.250MHz and 4.406MHz is used, the bias should take a positive value for a U line and a negative one for a V line. It is also possible to switch $f_m$ line-alternately to 4.250MHz and 4.406MHz. Then the correct bias value should be near to zero. LIDG is a control signal which provides for a proper timing window for the checking.

Instead of using a CORDIC processor followed by a differentiation stage one can use a circuitry as depicted in Fig. 3. Signal x(t) passes through a first sample delay D31 to the first input of a first multiplier M31 and is fed to the second input of a second multiplier M32. Signal y(t) is fed to the second input of the first multiplier M31 and passes through a second sample delay D32 to the first input of the second multiplier M32. In a subtractor S the output signal of M32 is subtracted from the output signal of M31. The resulting signal is multiplied in a following third multiplier M33 by $1/\{x^2(t)+y^2(t)\}$, leading to the differentiated phase signal $\Delta\Phi$. The following applies for SECAM signals in the circuitry of Fig. 3:

$$c(t) \;=\; B'(t)\cos\left(2\pi\left[f_m(t)+k\int_0^t D^\star(\tau)\,d\tau\right]\right)$$

$$x(t) \approx B'(t-\tau_{LP})\cos\left(2\pi k \int_0^{t-\tau_{LP}} D^*(\tau)\,d\tau\right)$$

$$y(t) \approx B'(t-\tau_{LP})\sin\left(2\pi k \int_0^{t-\tau_{LP}} D^*(\tau)\,d\tau\right)$$

It is supposed that:

$$B'(t) \approx B'(t-\Delta\tau)$$

$$2\pi k \int_{t-\Delta\tau}^{t} D^*(\tau)\,d\tau \approx 2\pi * kD^*(t) * \Delta\tau \ll \pi/6$$

then:

$$\Delta\Phi(t) = 2\pi * \Delta\tau * kD^*(t-\tau_{LP})$$

One possibility is to select a sampling and clock frequency which equals e.g. four times the colour carrier frequency, i.e. $4*f_c$. It is also possible to select a sampling and clock frequency of e.g. 18MHz, i.e. which is not a multiple of $f_c$. Contrary to that in the Hilbert filter method mentioned in the prior art above a sampling frequency of non-fourfold colour carrier frequency leads to a significantly more complicated design.

In comparison to a simple combination of the conventional digital PAL/NTSC and SECAM colour demodulators, the proposed multi-standard solution is easier to implement and there is more design freedom concerning the clock frequency.

**Claims**

1.   Method for initial digital SECAM colour signal (c(t)) demodulation, said SECAM colour signal having two colour components each of which is modulated on a different one of the two standard colour carriers having a different frequency, **characterised in that** said SECAM colour signal is processed in a single quadrature mixer (QUMX) using a single mixing frequency ($f_m$).

2.   Method according to claim 1, wherein in order to further demodulate said SECAM colour signal (c(t)) and to get a SECAM phase signal that is to be differentiated (DCL) subsequently, the function arctan(y/x) of the two quadrature mixer output signals x and y is calculated in particular in a CORDIC processor (CORDIC), x being a quadrature mixer (M1) output signal that has been multiplied by a cosine function of said mixing frequency ($f_m$) and y being a quadrature mixer (M2) output signal that has been multiplied by a sine function of said mixing frequency ($f_m$).

3.   Method according to claim 2, wherein said mixing frequency ($f_m$) lies in the frequency range between and including said two standard SECAM colour carrier frequencies, and wherein the resulting bias effect caused by the non-standard-matching colour carrier mixing frequency or frequencies is corrected by a corresponding clamping operation (DCL) subsequent to said arctan(y/x) calculation.

4. Method according to claim 3, wherein said bias effect is used for the line identification (DCL, LIDS) required in SECAM colour demodulation.

5. Method for digital demodulation using a quadrature mixer (QUMX), **characterised by** the features:

   - said digital demodulation is a PAL or NTSC or SECAM colour signal (c(t)) demodulation;
   - said quadrature mixer outputs the PAL or NTSC colour components (x, U; y, V) or in case of SECAM an x and an y signal, wherein in case of SECAM the following steps are carried out:

     - switching the mixing frequency ($f_m$) of said quadrature mixer line-alternately ($f_H$) to one of the standard SECAM colour carrier frequencies;
     - calculating, in particular in a CORDIC processor (CORDIC), the function arctan(y/x) from the x and y signals;
     - performing a differentiation (DCL) on the arctan(y/x) signal ($\Phi$), wherein the SECAM colour components (U, V) are obtained by an identification of the U and V lines.

6. Method according to one of claims 2 to 5, wherein an amplitude value $\sqrt{(x^2+y^2)}$ is calculated which is used as a control signal (ACC) for automatic colour control.

7. Method according to one of claims 1 to 6, wherein for digital PAL or NTSC colour signal (c(t)) demodulation said quadrature mixer (QUMX) is used with a correspondingly selected mixing frequency ($f_m$).

8. Apparatus for digital demodulation using a quadrature mixer (QUMX), **characterised by** the features:

   - said apparatus is suited for PAL or NTSC or SECAM colour signal (c(t)) demodulation;
   - said quadrature mixer (QUMX) outputs the PAL or NTSC colour components (x, U; y, V) or in case of SECAM an x and an y signal, wherein in case of SECAM a single mixing frequency ($f_m$) is used resulting in a bias effect caused by the non-standard-matching colour carrier mixing frequency or frequencies;
   - a stage following said quadrature mixer, in particular a CORDIC processor (CORDIC), which in case of SECAM calculates the function arctan(y/x);
   - a subsequent stage (DCL) in which a differentiation and a clamping is performed on the arctan(y/x) signal ($\Phi$), wherein said bias effect is corrected by a corresponding clamping operation and wherein the SECAM colour components (U, V) are obtained through an identification of the U and V lines.

9. Apparatus for digital demodulation using a quadrature mixer (QUMX), **characterised by** the features:

   - said apparatus is suited for PAL or NTSC or SECAM colour signal (c(t)) demodulation;
   - said quadrature mixer (QUMX) outputs the PAL or NTSC colour components (x, U; y, V) or in case of SECAM an x and an y signal, wherein in case of SECAM the mixing frequency ($f_m$) is switched line-alternately ($f_H$) to one of the standard SECAM colour carrier frequencies;
   - a stage following said quadrature mixer, in particular a CORDIC processor (CORDIC), which in case of SECAM calculates the function arctan(y/x);
   - a subsequent stage (DCL) in which a differentiation is performed on the arctan(y/x) signal ($\Phi$), wherein the SECAM colour components (U, V) are obtained through an identification of the U and V lines.

10. Apparatus according to claim 8 or 9, wherein in said CORDIC processor also an amplitude value $\sqrt{(x^2+y^2)}$ is calculated which is used as a control signal (ACC) for automatic colour control.

**Patentansprüche**

1. Verfahren zur anfänglichen digitalen SECAM-Farbsignal-Demodulation (c(t)), wobei das SECAM-Farbsignal zwei Farbkomponenten hat, von denen jede auf einen verschiedenen der beiden Norm-Farbträger moduliert ist, die eine unterschiedliche Frequenz aufweisen, **dadurch gekennzeichnet, daß** das SECAM-Farbsignal in einem einzigen Quadratur-Mischer (QUMX) unter Verwendung einer einzigen Mischfrequenz ($f_m$) verarbeitet wird.

**2.** Verfahren nach Anspruch 1, bei dem, um ferner das SECAM-Farbsignal (c(t)) weiter zu demodulieren, und um ein SECAM-Phasensignal zu erhalten, das anschließend differenziert (DCL) werden soll, die Funktion arctg(y/x) der beiden Quadratur-Mischer-Ausgangssignalen x und y, insbesondere in einem CORDIC-Prozessor (CORDIC) berechnet wird, wobei x ein Quadratur-Mischer-Ausgangssignal (M1) ist, das mit einer Cosinus-Funktion der Mischfrequenz ($f_m$) multipliziert worden ist, und y ein Quadratur-Mischer-Ausgangssignal (M2) ist, das mit einer Sinus-Funktion der Mischfrequenz ($f_m$) multipliziert worden ist.

**3.** Verfahren nach Anspruch 2, bei dem die Mischfrequenz ($f_m$) im Frequenzbereich zwischen den beiden Norm-SECAM-Farbträger-Frequenzen und diese einschließend liegt, und wobei der resultierende Vorspannungs-Effekt, verursacht durch die nicht an die Norm angepaßte Farbträger-Mischfrequenz oder - frequenzen durch eine entsprechende Klemmoperation (DCL) im Anschluß an die arctg(y/x)-Berechnung korrigiert wird.

**4.** Verfahren nach Anspruch 3, bei dem der Vorspannungs-Effekt für die Zeilen-Identifizierung (DCL, LIDS) benutzt wird, die bei der SECAM-Farb-Demodulation benötigt wird.

**5.** Verfahren zur digitalen Demodulation unter Verwendung eines Quadratur-Mischers (QUMX), **gekennzeichnet durch** die Merkmale:

- die digitale Demodulation ist eine PAL- oder NTSC- oder SECAM-Farbsignal(c(t))-Demodulation;
- die Quadratur-Mischer geben die PAL- oder NTSC-Farbkomponenten (x, U; y, V) oder im Fall von SECAM ein x- und ein y-Signal aus, wobei im Fall von SECAM die folgenden Schritte ausgeführt werden:

  - Schalten der Mischfrequenz ($f_m$) des Quadratur-Mischers zeilenabwechselnd ($f_H$) auf eine der Norm-SECAM-Farbträger-Frequenzen;
  - Berechnen insbesondere in einem CORDIC-Prozessor (CORDIC) die Funktion arctg(y/x) aus den x- und y-Signalen;
  - Ausführen einer Differentiation (DCL) des arctg(y/x)-Signals (Φ), wobei die SECAM-Farbkomponenten (U, V) **durch** eine Identifizierung der U- und V-Zeilen erhalten werden.

**6.** Verfahren nach einem der Ansprüche 2 bis 5, bei dem ein Amplitudenwert $\sqrt{(x^2+y^2)}$ berechnet wird, der als Steuersignal (ACC) für die automatische Farbregelung verwendet wird.

**7.** Verfahren nach einem der Ansprüche 1 bis 6, bei dem für die digitale PAL- oder NTSC-Farbsignal(c(t))-Demodulation der Quadratur-Mischer (QUMX) mit einer entsprechend ausgewählten Mischfrequenz ($f_m$) verwendet wird.

**8.** Vorrichtung zur digitalen Demodulation unter Verwendung eines Quadratur-Mischers (QUMX), **gekennzeichnet durch** die Merkmale:

- die Vorrichtung ist für die Demodulation von PAL- oder NTSC- oder SECAM-Farbsignalen (c(t)) geeignet;
- der Quadratur-Mischer (QUMX) gibt die PAL- oder NTSC-Farbkompo-nenten (x, U; y, V) oder im Fall von SECAM ein x-und ein y-Signal aus, wobei im Fall von SECAM eine einzige Mischfrequenz ($f_m$) verwendet wird, was zu einem Vorspannungs-Effekt führt, der **durch** die nicht an die Norm angepaßte Farbträger-Mischfrequenz oder -frequenzen verursacht wird;
- eine dem Quadratur-Mischer folgende Stufe, insbesondere ein CORDIC-Prozessor (CORDIC), der im Fall von SECAM die Funktion arctg(y/x) berechnet;
- eine nachfolgende Stufe (DCL), in der mit dem arctg(y/x)-Signal (Φ) eine Differentiation und eine Klemmung ausgeführt wird, wobei der Vorspannungs-Effekt **durch** eine entsprechende Klemmoperation korrigiert wird, und wobei die SECAM-Farbkomponenten (U, V) **durch** eine Identifizierung der U- und V-Zeilen erhalten werden.

**9.** Vorrichtung zur digitalen Demodulation unter Verwendung eines Quadratur-Mischers (QUMX), **gekennzeichnet durch** die Merkmale:

- die Vorrichtung ist zur Demodulation von PAL- oder NTSC- oder SECAM-Farbsignalen (c(t)) geeignet;
- der Quadratur-Mischer (QUMX) gibt die PAL- oder NTSC-Farbkomponenten (x, U; y, V) oder im Fall von SECAM ein x- und ein y-Signal aus, wobei im Fall von SECAM die Mischfrequenz ($f_m$) zeilenabwechselnd ($f_H$) auf eine der Norm-SECAM-Farbträgerfrequenzen geschaltet wird;
- eine dem Quadratur-Mischer folgende Stufe, insbesondere ein CORDIC-Prozessor (CORDIC), der im Fall von SECAM die Funktion arctg(y/x) berechnet;

- eine nachfolgende Stufe (DCL), in der eine Differentiation des arctg(y/x)-Signals (Φ) ausgeführt wird, wobei die SECAM-Farbkomponenten (U, V) **durch** eine Identifizierung der U- und V-Zeilen erhalten werden.

**10.** Vorrichtung nach Anspruch 8 oder 9, bei der in dem CORDIC-Prozessor auch ein Amplitudenwert $\sqrt{x^2+y^2}$ berechnet wird, der als Steuersignal (ACC) für die automatische Farbregelung verwendet wird.

**Revendications**

**1.** Procédé de démodulation de signal de chrominance SECAM numérique (c(t)) initiale, ledit signal de chrominance SECAM ayant deux composantes de chrominance étant chacune modulée sur une sous-porteuse différente des deux sous-porteuses de chrominance standard ayant une fréquence différente, **caractérisé en ce que** ledit signal de chrominance SECAM est traité dans un mélangeur quadratique unique (QUMX) utilisant une seule fréquence de mixage ($f_m$).

**2.** Procédé selon la revendication 1, dans lequel afin de démoduler en outre ledit signal de chrominance SECAM (c(t)) et obtenir un signal de phase SECAM qui doit être différencié ultérieurement (DCL), la fonction arctan(y/x) des deux signaux de sortie du mélangeur quadratique x et y est calculée en particulier dans un processeur CORDIC (CORDIC), x étant un signal de sortie de mélangeur quadratique (M1) qui a été multiplié par une fonction cosinus de ladite fréquence de mixage ($f_m$) et y étant un signal de sortie de mélangeur quadratique (M2) qui a été multipliée par une fonction sinus de ladite fréquence de mixage ($f_m$).

**3.** Procédé selon la revendication 2, dans lequel ladite fréquence de mixage ($f_m$) repose dans la gamme de fréquences entre et comportant lesdites deux fréquences de sous-porteuses de chrominance SECAM standard, et dans lequel l'effet de polarisation résultant causé par la ou les fréquences de mixage de sous-porteuses de chrominance sans correspondance standard est corrigé par une opération de fixation de niveau correspondante (DCL) après ledit calcul d'arctan(y/x).

**4.** Procédé selon la revendication 3, dans lequel ledit effet de polarisation est utilisé pour l'identification de lignes (DCL, LIDS) nécessaire dans la démodulation de sous-porteuse de chrominance SECAM.

**5.** Procédé de démodulation numérique utilisant un mélangeur quadratique (QUMX), **caractérisé par** les caractéristiques suivantes :

- ladite démodulation numérique est une démodulation de signal de chrominance (c(t)) PAL, NTSC ou SECAM ;
- ledit mélangeur quadratique sort les composantes de chrominance PAL ou NTSC (x, U ; y, V) ou dans le cas SECAM un signal x et un signal y, où dans le cas SECAM les étapes suivantes sont effectuées :

  - commutation de la fréquence de mixage ($f_m$) dudit mélangeur quadratique par lignes alternées ($f_H$) sur l'une des fréquences de sous-porteuses de chrominance SECAM standard ;
  - calcul, en particulier dans un processeur CORDIC (CORDIC), de la fonction arctan(y/x) à partir des signaux x et y ;
  - exécution d'une différenciation (DCL) sur le signal arctan(y/x) (Φ), où les composantes de chrominance SECAM (U, V) sont obtenues par une identification des lignes U et V.

**6.** Procédé selon l'une quelconque des revendications 2 à 5, dans lequel une valeur d'amplitude $\sqrt{x^2 + y^2}$ qui est utilisée comme signal de commande (ACC) de commande automatique de couleur est calculée.

**7.** Procédé selon l'une quelconque des revendications 1 à 6, dans lequel pour la démodulation de signal de chrominance PAL ou NTSC numérique (c(t)), ledit mélangeur quadratique (QUMX) est utilisé avec une fréquence de mixage sélectionnée en conséquence ($f_m$).

**8.** Dispositif de démodulation numérique utilisant un mélangeur quadratique (QUMX), **caractérisé par** les caractéristiques suivantes :

- ledit dispositif convient à la démodulation de signal de chrominance PAL, NTSC ou SECAM ;
- ledit mélangeur quadratique (QUMX) sort les composantes de chrominance PAL ou NTSC (x, U ; y, V) ou dans le cas SECAM un signal x et un signal y, où dans le cas SECAM une seule fréquence de mixage ($f_m$) est utilisée, donnant un effet de polarisation causé par la ou les fréquences de mixage des sous-porteuses de chrominance sans correspondance standard ;

- un étage suivant ledit mélangeur quadratique, en particulier un processeur CORDIC (CORDIC), qui dans le cas SECAM calcule la fonction arctan(y/x) ;
- un étage suivant (DCL) dans lequel une différenciation et une fixation de niveau sont effectuées sur le signal arctan(y/x) ($\Phi$), dans lequel ledit effet de polarisation est corrigé par une opération de fixation de niveau correspondante et dans lequel les composantes de chrominance SECAM (U, V) sont obtenues par une identification des lignes U et V.

9.  Dispositif de démodulation numérique utilisant un mélangeur quadratique (QUMX), **caractérisé par** les caractéristiques suivantes :

- ledit dispositif convient à la démodulation de signaux de chrominance (c(t)) PAL, NTSC ou SECAM ;
- ledit mélangeur quadratique (QUMX) sort les composantes de chrominance PAL ou NTSC (x, U ; y, V) ou dans le cas SECAM un signal x et un signal y, où dans le cas SECAM la fréquence de mixage ($f_m$) est commutée par lignes alternées ($f_H$) sur l'une des fréquences de sous-porteuses de chrominance SECAM standard :

  - un étage suivant ledit mélangeur quadratique, en particulier un processeur CORDIC (CORDIC), qui dans le cas SECAM calcule la fonction arctan(y/x) ;
  - un étage suivant (DCL) dans lequel une différenciation est effectuée sur le signal arctan(y/x) ($\Phi$), dans lequel les composantes de chrominance SECAM (U, V) sont obtenues par une identification des lignes U et V.

10. Dispositif selon la revendication 8 ou 9, dans lequel dans ledit processeur CORDIC une valeur d'amplitude $\sqrt{(x^2 + y^2)}$ qui est utilisée comme signal de commande (ACC) de commande automatique de couleur est aussi calculée.

**Fig.1**

**Fig.2**

**Fig.3**

**Fig.4**